# EUROPEAN PATENT APPLICATION

(11) **EP 2 722 787 A1**
(43) Date of publication of application: **23.04.2014**
(21) Application number: 13189183.0
(22) Date of filing: 17.10.2013
(51) Int. Cl.: G06F 21/80, G11B 20/12

(54) **Method and apparatus for writing and reading encrypted hard disk data**

(30) Priority: 19.10.2012 CN 201210400819
(71) Applicant: Huawei Technologies Co., Ltd., Shenzhen, Guangdong 518129 (CN)
(72) Inventor: Qian, Yan, 518129 Shenzhen Guangdong (CN)
(74) Representative: Maiwald Patentanwalts GmbH

(57) **Abstract**

Embodiments provide a method and an apparatus for writing and reading hard disk data. The writing method includes: acquiring plain-text data; encrypting the plain-text data by using an encryption key to obtain cipher-text data and a decryption key; and writing the cipher-text data into an available area of a hard disk, and writing the decryption key into a reserved area of the hard disk. In the embodiments, because the decryption key is stored in the reserved area of the hard disk and does not occupy the available area of the hard disk, a storage resource is saved; and because data in the reserved area cannot be read by using a conventional command, the decryption key cannot be stolen, thereby improving reliability of data encryption and resolving a problem that existing encryption of hard disk data causes a decrease in actual data storage capacity of the hard disk and easy leakage.

## Description

### TECHNICAL FIELD

Embodiments of the present invention relate to a method and an apparatus for writing and reading hard disk data, and pertain to the field of storage technologies.

### BACKGROUND

A hard disk is widely applied to fields such as the military industry, industrial control, monitoring, or the like, because it has advantages such as high read and write performance, large capacity, and the like. The hard disk is used as a medium supporting existent storage of mass data, and once data on the hard disk is exposed, an immeasurable loss will be caused to an individual or enterprise customer. The data on the hard disk needs to be encrypted to ensure reliability of the data on the hard disk.

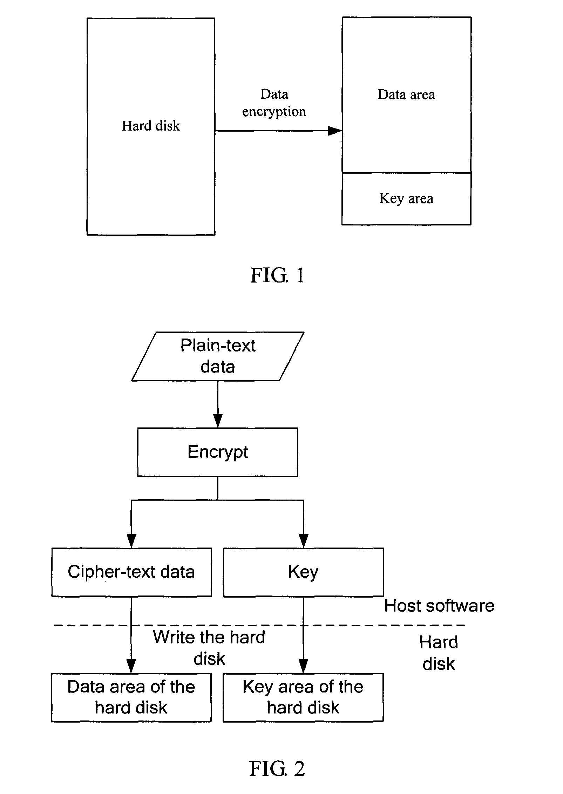

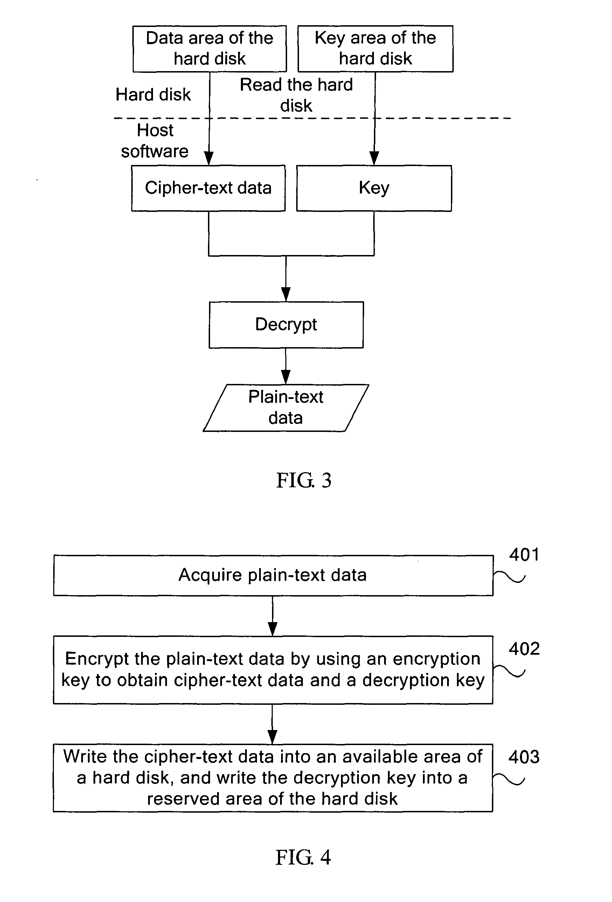

FIG. 1 is a schematic diagram of a technology for encrypting hard disk data in the prior art. As shown in FIG. 1, a hard disk is divided into two parts: a data area and a key area, where cipher-text data after encryption is stored in the data area, whereas a key is stored in the key area on the hard disk and a size of the encryption area depends on strength of an encryption algorithm. FIG. 2 is a schematic diagram of an encryption process in the encryption technology shown in FIG. 1. As shown in FIG. 2, plain-text data is encrypted on a host software side, and the cipher-text data and the key obtained after the encryption are respectively written into the data area and the key area of the hard disk. FIG. 3 is a schematic diagram of a decryption process in the encryption technology shown in FIG. 1. As shown in FIG. 3, host software reads the encrypted text and the key respectively from the data area and the key area of the hard disk, and performs decryption to obtain the plain-text data.

However, in the prior art, dividing an available area of a hard disk into a data area and a key area is equivalent to decreasing actual data storage capacity of the hard disk. In addition, as the strength of the encryption algorithm increases, capacity of the data area further decreases; and because both the cipher-text data and the key on the hard disk are stored in the available area of the hard disk, if a situation such as stealing of the hard disk or the like occurs, the hard disk is easily read, resulting in information leakage.

### SUMMARY

Embodiments of the present invention provide a method and an apparatus for writing and reading hard disk data, so as to resolve a problem that existing encryption of hard disk data causes a decrease in actual data storage capacity of a hard disk and easy leakage.

According to a first aspect, an embodiment of the present invention provides a method for writing hard disk data, where the method includes:
acquiring plain-text data;
encrypting the plain-text data by using an encryption key to obtain cipher-text data and a decryption key; and
writing the cipher-text data into an available area of a hard disk, and writing the decryption key into a reserved area of the hard disk.

In a first possible implementation of the first aspect, before the encrypting the plain-text data by using an encryption key to obtain cipher-text data, the method further includes:
decomposing the plain-text data into multiple plain-text data blocks;
the encrypting the plain-text data by using an encryption key to obtain cipher-text data specifically includes:
   encrypting the multiple plain-text data blocks respectively by using the encryption key to obtain multiple cipher-text data blocks and the decryption key corresponding to each cipher-text data block; and
   the writing the cipher-text data into an available area of a hard disk, and writing the decryption key into a reserved area of the hard disk specifically includes:
      writing the multiple cipher-text data blocks into the available area of the hard disk, and writing the decryption key corresponding to each cipher-text data block into the reserved area of the hard disk.

In a second possible implementation of the first aspect, with reference to the first possible implementation of the first aspect, a size of each cipher-text data block does not exceed capacity of a data area of each sector on the hard disk;
the writing the multiple cipher-text data blocks into the available area of the hard disk specifically includes:
writing the multiple cipher-text data blocks into data areas of multiple sectors on a one-to-one correspondence; and
the writing the decryption key corresponding to each cipher-text data block into the reserved area of the hard disk specifically includes:
   writing the decryption key corresponding to each cipher-text data block into a reserved area of a sector in which each cipher-text data block is located.

In a third possible implementation of the first aspect, with reference to the first aspect or the first or second possible implementation of the first aspect, the writing the decryption key into a reserved area of the hard disk specifically includes:
writing the decryption key into the reserved area of the hard disk by using a small computer system interface SCSI WRITE LONG command.

According to a second aspect, an embodiment of the present invention provides a method for reading hard disk data, where the method includes:
reading cipher-text data from an available area of a hard disk, and reading a decryption key from a reserved area of the hard disk; and
decrypting the cipher-text data by using the decryption key to obtain plain-text data.

In a first possible implementation of the second aspect, the reading cipher-text data from an available area of a hard disk, and reading a decryption key from a reserved area of the hard disk specifically include:
reading multiple cipher-text data blocks from the available area of the hard disk, and reading the decryption key corresponding to each cipher-text data block from the reserved area of the hard disk;
the decrypting the cipher-text data by using the decryption key to obtain plain-text data specifically includes:
   decrypting the multiple cipher-text data blocks by using the decryption key corresponding to each cipher-text data block to obtain multiple plain-text data blocks; and
   after the decrypting the cipher-text data by using the decryption key to obtain plain-text data, the method further includes:
      combining the multiple plain-text data blocks to obtain the plain-text data.

In a second possible implementation of the second aspect, with reference to the first possible implementation of the second aspect, a size of each cipher-text data block does not exceed capacity of a data area of each sector on the hard disk; each cipher-text data block is stored in a data area of a sector of the hard disk on a one-to-one correspondence;
the reading multiple cipher-text data blocks from the available area of the hard disk specifically includes:
reading the multiple cipher-text data blocks respectively from data areas of multiple sectors of the hard disk; and
the reading the decryption key corresponding to each cipher-text data block from the reserved area of the hard disk specifically includes:
   reading the decryption key corresponding to each cipher-text data block respectively from a reserved area of a sector in which each cipher-text data block is stored.

In a third possible implementation of the second aspect, with reference to the second aspect or the first or second possible implementation of the second aspect, the reading the decryption key from a reserved area of the hard disk specifically includes:
reading the decryption key from the reserved area of the hard disk by using a small computer system interface SCSI READ LONG command.

According to a third aspect, an embodiment of the present invention provides an apparatus for writing hard disk data, where the apparatus includes:
an acquiring module, configured to acquire plain-text data;
an encrypting module, configured to encrypt, by using an encryption key, the plain-text data acquired by the acquiring module to obtain cipher-text data and a decryption key; and
a writing module, configured to write the cipher-text data obtained by the encrypting module into an available area of a hard disk, and write the decryption key obtained by the encrypting module into a reserved area of the hard disk.

In a first possible implementation of the third aspect, the apparatus further includes:
a decomposing module, configured to decompose the plain-text data acquired by the acquiring module into multiple plain-text data blocks; where:
   the encrypting module is specifically configured to respectively encrypt, by using the encryption key, the multiple plain-text data blocks obtained by the decomposing module to obtain multiple cipher-text data blocks and the decryption key corresponding to each cipher-text data block; and
   the writing module is specifically configured to write the multiple cipher-text data blocks obtained by the encrypting module into the available area of the hard disk, and write the decryption key corresponding to each cipher-text data block that is obtained by the encrypting module into the reserved area of the hard disk.

In a second possible implementation of the third aspect, with reference to the third aspect or the first possible implementation of the third aspect, a size of each cipher-text data block does not exceed capacity of a data area of each sector on the hard disk; and
the writing module is specifically configured to:
write the multiple cipher-text data blocks obtained by the encrypting module into data areas of multiple sectors on a one-to-one correspondence, and write the decryption key obtained by the encrypting module and corresponding to each cipher-text data block into a reserved area of a sector in which each cipher-text data block is located.

In a third possible implementation of the third aspect, with reference to the third aspect or the first or second possible implementation of the third aspect, the writing module is specifically configured to:
write the decryption key obtained by the encrypting module into the reserved area of the hard disk by using a small computer system interface SCSI WRITE LONG command.

According to a fourth aspect, an embodiment of the present invention provides an apparatus for reading hard disk data, where the apparatus includes:
a reading module, configured to read cipher-text data from an available area of a hard disk, and read a decryption key from a reserved area of the hard disk; and
a decrypting module, configured to decrypt, by using the decryption key read by the reading module, the cipher-text data read by the reading module to obtain plain-text data.

In a first possible implementation of the fourth aspect, the reading module is specifically configured to:
read multiple cipher-text data blocks from the available area of the hard disk, and read the decryption key corresponding to each cipher-text data block from the reserved area of the hard disk;
the decrypting module is specifically configured to:
   decrypt, by using the decryption key read by the reading module and corresponding to each cipher-text data block, the multiple cipher-text data blocks read by the reading module to obtain multiple plain-text data blocks; and
   the apparatus further includes:
a combining module, configured to combine the multiple plain-text data blocks obtained by the decrypting module to obtain the plain-text data.

In a second possible implementation of the fourth aspect, with reference to the first possible implementation of the fourth aspect, a size of each cipher-text data block does not exceed capacity of a data area of each sector on the hard disk; each cipher-text data block is stored in a data area of a sector of the hard disk on a one-to-one correspondence; and
the reading module is specifically configured to:
read the multiple cipher-text data blocks respectively from data areas of multiple sectors of the hard disk, and read the decryption key corresponding to each cipher-text data block respectively from a reserved area of a sector in which each cipher-text data block is stored.

In a third possible implementation of the fourth aspect, with reference to the fourth aspect or the first or second possible implementation of the fourth aspect, the reading module is specifically configured to read the decryption key from the reserved area of the hard disk by using a small computer system interface SCSI READ LONG command.

The technical solutions have the following advantages or beneficial effects:

In the embodiments of the present invention, because a decryption key is stored in a reserved area of a hard disk and does not occupy an available area of the hard disk, a storage resource is saved; and because data in the reserved area cannot be read by using a conventional command, the decryption key cannot be stolen, thereby improving reliability of data encryption and resolving a problem that existing encryption of hard disk data causes a decrease in actual data storage capacity of the hard disk and easy leakage.

### BRIEF DESCRIPTION OF DRAWINGS

To make the technical solutions in the embodiments of the present invention or in the prior art more comprehensible, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a technology for encrypting hard disk data in the prior art;
FIG. 2 is a schematic diagram of an encryption process in the encryption technology shown in FIG. 1;
FIG. 3 is a schematic diagram of a decryption process in the encryption technology shown in FIG. 1;
FIG. 4 is a schematic flowchart of a method for writing hard disk data according to an embodiment of the present invention;
FIG. 5 is a schematic flowchart of a method for reading hard disk data according to an embodiment of the present invention;
FIG. 6 is a schematic structural diagram of an apparatus for writing hard disk data according to an embodiment of the present invention;
FIG. 7 is a schematic structural diagram of another apparatus for writing hard disk data according to an embodiment of the present invention;
FIG. 8 is a schematic structural diagram of an apparatus for reading hard disk data according to an embodiment of the present invention; and
FIG. 9 is a schematic structural diagram of another apparatus for reading hard disk data according to an embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all the embodiments of the present invention. All other embodiments obtained by a person of ordinary skill in the art based on the embodiments of the present invention without creative efforts shall fall within the protection scope of the present invention.

FIG. 4 is a schematic flowchart of a method for writing hard disk data according to an embodiment of the present invention. As shown in FIG. 4, the method includes the following steps:

401. Acquire plain-text data.

For example, an apparatus for writing hard disk data according to this embodiment of the present invention acquires plain-text data. Specifically, the apparatus for writing hard disk data is implemented by host software. Generally, the host software includes a driver layer, an operating system layer, and an application layer. The application layer may directly interact with a user. The operating system layer is responsible for scheduling of the whole host, and a file system is arranged in the operating system layer, where the file system is configured to manage data on a hard disk of a host. The driver layer may communicate with a main control unit on the hard disk of the host by using a small computer system interface (Small Computer System Interface, SCSI) protocol.

402. Encrypt the plain-text data by using an encryption key to obtain cipher-text data and a decryption key.

Here, the encryption key may be preset. Specifically, an existing encryption algorithm may be used for the encryption, which is not limited by this embodiment of the present invention. The decryption key corresponds to the encryption key and the encryption algorithm. For example, when a symmetric key encryption algorithm is used, the decryption key is the same as the encryption key.

403. Write the cipher-text data into an available area of a hard disk, and write the decryption key into a reserved area of the hard disk.

Specifically, the available area of the hard disk is an area visible to the user, that is, a conventional accessible area. The reserved area (Reserved) is a non-conventional accessible area. Here, a conventional accessible area means that the area may be accessed by using a conventional read or write command; the conventional read command includes an SCSI block command (Block Command) READ10, READ12, READ16, READ32, or the like; and the conventional write command includes: WRITE10, WRITE12, WRITE16, WRITE32, or the like.

Specifically, in this embodiment of the present invention, a special SCSI data write command, that is, a WRITE LONG command, may be utilized to write the key into the reserved area of the hard disk.

In this embodiment, an application layer acquires plain-text data, and transfers the plain-text data to a file system of an operating system layer; the file system determines a storage location of the plain-text data on a hard disk, and transfers the plain-text data to a driver layer; the driver layer encrypts the plain-text data and stores the cipher-text data and a decryption key that are obtained after the encryption into the storage location specified by the file system on the hard disk. Since the encryption is performed at the driver layer, the cipher-text data does not exist in a form of a file and is invisible to a user, thereby improving data security, as compared with the prior art in which encryption is performed at the application layer and the cipher-text data exists in the form of a file and is visible to the user.

If the plain-text data generated by the application layer is large, the file system of the operating system layer divides the plain-text data into multiple plain-text data blocks, and the driver layer encrypts the multiple plain-text data blocks respectively, further improving speed of encryption, as compared with the prior art in which the whole plain-text data is encrypted at the application layer. Accordingly, between steps 401 and 402, the method further includes:
decomposing the plain-text data into the multiple plain-text data blocks.

Step 402 specifically includes:
encrypting the multiple plain-text data blocks respectively by using the encryption key to obtain multiple cipher-text data blocks and the decryption key corresponding to each cipher-text data block.

Step 403 specifically includes:
writing the multiple cipher-text data blocks into the available area of the hard disk, and writing the decryption key corresponding to each cipher-text data block into the reserved area of the hard disk.

Specifically, necessity of decomposing the plain-text data and the number of plain-text data blocks into which the plain-text data is decomposed are decided by the file system according to a size of the plain-text data, which is not limited by this embodiment of the present invention.

It should be noted that if decryption keys corresponding to the cipher-text data blocks are different, the decryption keys corresponding to the cipher-text data blocks need to be respectively written into corresponding storage locations in the reserved area; or if decryption keys corresponding to the cipher-text data blocks are the same, only one decryption key may be written into the reserved area. Further, data of one decryption key may be divided into multiple copies, and each copy is stored in a different space of the reserved area, for example, stored in reserved areas in different sectors, thereby greatly expanding a type, strength, and the like of encryption and decryption algorithms used in this embodiment of the present invention.

Further, to optimize a storage space on the hard disk and reduce hard disk fragments, the cipher-text data blocks may be stored in a unit of a sector (sector) on the hard disk. Accordingly, a size of each cipher-text data block does not exceed capacity of a data area of each sector on the hard disk.

The writing the multiple cipher-text data blocks into the available area of the hard disk specifically includes:
writing the multiple cipher-text data blocks into data areas of multiple sectors on a one-to-one correspondence.

The writing the decryption key corresponding to each cipher-text data block into the reserved area of the hard disk specifically includes:
writing the decryption key corresponding to each cipher-text data block into a reserved area of a sector in which each cipher-text data block is located.

Specifically, each sector on the hard disk is composed of a data area and a reserved area. Generally, capacity of the data area in each sector is 512 bytes, and capacity of the reserved area is greater than 100 bytes. Writing which cipher-text data block into which sector may be specified by the file system at the operating system layer; and specifically may be specified in a parameter of the WRITE LONG command, that is, a logical block address (LOGICAL BLOCK ADDRESS). For example, to write the cipher-text data into a sector 0, LOGICAL BLOCK ADDRESS is set to 0; or to write the cipher-text data into a sector 10000, LOGICAL BLOCK ADDRESS is set to 10000.

Further, to improve reliability of the encryption, different encryption keys and encryption algorithms may be used for the plain-text data blocks, which is not limited by this embodiment of the present invention.

In this embodiment of the present invention, because a decryption key is stored in a reserved area of a hard disk and does not occupy an available area of the hard disk, a storage resource is saved; and because data in the reserved area cannot be read by using a conventional command, the decryption key cannot be stolen, thereby improving reliability of data encryption and resolving a problem that existing encryption of hard disk data causes a decrease in actual data storage capacity of the hard disk and easy leakage. Further, a file system decomposes large plain-text data into small plain-text data blocks and then encrypts the plain-text data blocks respectively at a driver layer, thereby improving encryption efficiency.

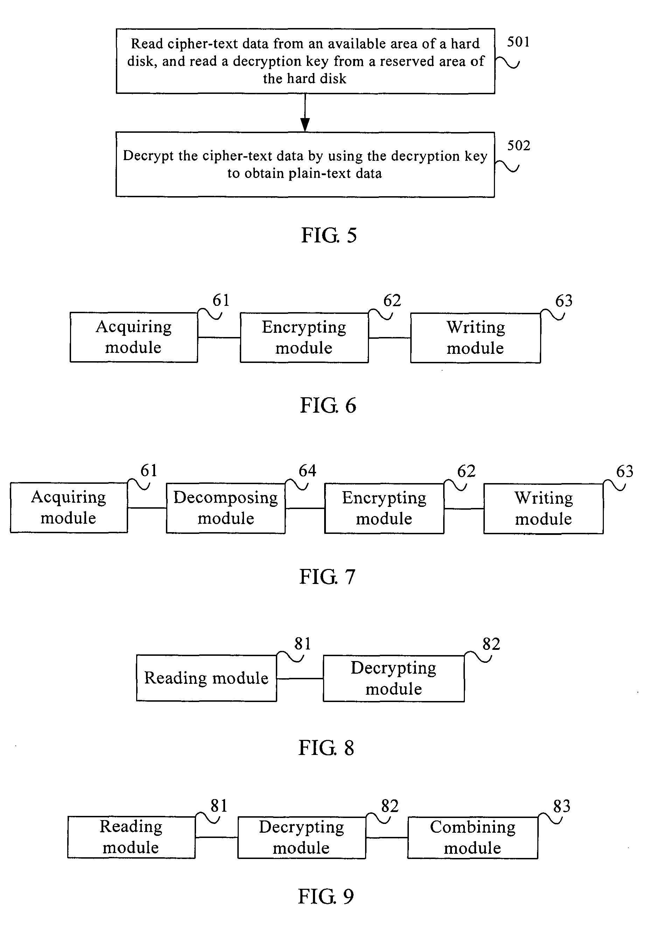

FIG. 5 is a schematic flowchart of a method for reading hard disk data according to an embodiment of the present invention. As shown in FIG. 5, the method includes the following steps:

501. Read cipher-text data from an available area of a hard disk, and read a decryption key from a reserved area of the hard disk.

For example, an apparatus for reading hard disk data according to this embodiment of the present invention reads cipher-text data from an available area of a hard disk, and reads a decryption key from a reserved area of the hard disk. Specifically, the apparatus for reading hard disk data may be implemented by host software.

Specifically, in this embodiment of the present invention, a special SCSI data read command, that is, a READ LONG command, may be used to read the decryption key from the reserved area of the hard disk.

502. Decrypt the cipher-text data by using the decryption key to obtain plain-text data.

Specifically, the decryption key and a decryption algorithm corresponding to an encryption algorithm for obtaining the cipher-text data are used for the decryption, which is not limited by this embodiment of the present invention.

In this embodiment, the apparatus for reading hard disk data executes steps 501 and 502 at a driver layer, and then the driver layer may transfer the obtained plain-text data to an application layer through a file system. It should be noted that reading the cipher-text data and the decryption key from which storage location of the hard disk in step 501 is specified by the file system.

If the plain-text data to be read is previously decomposed by the file system into multiple plain-text data blocks before being written into the hard disk, and the data blocks are encrypted respectively at the driver layer, accordingly, during the reading, the driver layer reads and decrypts corresponding multiple cipher-text data blocks to obtain the multiple plain-text data blocks, and then the file system combines the multiple plain-text data blocks obtained after the decryption to obtain the plain-text data. Accordingly, step 501 specifically includes:
reading the multiple cipher-text data blocks from the available area of the hard disk, and reading the decryption key corresponding to each cipher-text data block from the reserved area of the hard disk.

Step 502 specifically includes:
decrypting the multiple cipher-text data blocks by using the decryption key corresponding to each cipher-text data block to obtain the multiple plain-text data blocks.

After step 502, the method further includes:
combining the multiple plain-text data blocks to obtain the plain-text data.

It should be noted that if decryption keys corresponding to the cipher-text data blocks are the same, only one decryption key may be read; or if the decryption keys corresponding to the cipher-text data blocks are different, the decryption keys corresponding to the cipher-text data blocks need to be read respectively from corresponding storage locations in the reserved area. Further, decryption algorithms corresponding to the cipher-text data blocks may be the same or different.

Further, if a size of each cipher-text data block does not exceed capacity of a data area of each sector on the hard disk, and each cipher-text data block is stored in a data area of a sector of the hard disk on a one-to-one correspondence, the reading the multiple cipher-text data blocks from the available area of the hard disk specifically includes:
reading the multiple cipher-text data blocks respectively from data areas of multiple sectors of the hard disk; and
the reading the decryption key corresponding to each cipher-text data block from the reserved area of the hard disk specifically includes:
   reading the decryption key corresponding to each cipher-text data block respectively from a reserved area of a sector in which each cipher-text data block is stored.

Generally, reading a cipher-text data block from which sector may be specified by the file system at an operating system layer. Specifically, the sector may be specified in a parameter of a WRITE READ command, that is, a logical block address (LOGICAL BLOCK ADDRESS). For example, to read data in a sector 0, LOGICAL BLOCK ADDRESS is set to 0; or to read data in a sector 10000, LOGICAL BLOCK ADDRESS is set to 10000.

In this embodiment of the present invention, a decryption key stored in a reserved area of a hard disk is read, and cipher-text data read from an available area of the hard disk is decrypted to obtain plain-text data; because the decryption key does not occupy the available area of the hard disk, a storage resource is saved; and because data in the reserved area cannot be read by using a conventional command, the decryption key cannot be stolen, thereby improving reliability of data encryption and resolving a problem that existing encryption of hard disk data causes a decrease in actual data storage capacity of the hard disk and easy leakage. Further, small cipher-text data blocks are decrypted respectively at a driver layer and then are combined by a file system, thereby improving encryption efficiency as compared with the prior art in which the whole plain-text data is decrypted at an application layer.

A person of ordinary skill in the art may understand that all or a part of the steps in the method embodiments may be implemented by a program instructing relevant hardware. The program may be stored in a computer readable storage medium. When the program runs, the steps in the method embodiments are performed. The storage medium may be any medium capable of storing program codes, such as a ROM, a RAM, a magnetic disk, or an optical disk.

FIG. 6 is a schematic structural diagram of an apparatus for writing hard disk data according to an embodiment of the present invention. As shown in FIG. 6, the apparatus includes:
an acquiring module 61, configured to acquire plain-text data;
an encrypting module 62, configured to encrypt, by using an encryption key, the plain-text data acquired by the acquiring module 61 to obtain cipher-text data and a decryption key; and
a writing module 63, configured to write the cipher-text data obtained by the encrypting module 62 into an available area of a hard disk, and write the decryption key obtained by the encrypting module 62 into a reserved area of the hard disk.

Optionally, the writing module 63 is specifically configured to:
write the decryption key obtained by the encrypting module into the reserved area of the hard disk by using an SCSI WRITE LONG command.

FIG. 7 is a schematic structural diagram of another apparatus for writing hard disk data according to an embodiment of the present invention. As shown in FIG. 7, on a basis of the embodiment shown in FIG. 6, the apparatus further includes:
a decomposing module 64, configured to decompose the plain-text data acquired by the acquiring module 61 into multiple plain-text data blocks; where:
   the encrypting module 62 is specifically configured to respectively encrypt, by using the encryption key, the multiple plain-text data blocks obtained by the decomposing module 64 to obtain multiple cipher-text data blocks and the decryption key corresponding to each cipher-text data block; and
   the writing module 63 is specifically configured to write the multiple cipher-text data blocks obtained by the encrypting module 62 into the available area of the hard disk, and write the decryption key corresponding to each cipher-text data block that is obtained by the encrypting module 62 into the reserved area of the hard disk.

Further, if a size of each cipher-text data block does not exceed capacity of a data area of each sector on the hard disk, the writing module 63 may be specifically configured to:
write the multiple cipher-text data blocks obtained by the encrypting module 62 into data areas of multiple sectors on a one-to-one correspondence, and write the decryption key obtained by the encrypting module 62 and corresponding to each cipher-text data block into a reserved area of a sector in which each cipher-text data block is located.

It should be noted that the apparatus for writing hard disk data according to this embodiment may be implemented by host software. Specifically, the acquiring module 61 may be located at an application layer of the host software; the encrypting module 62 and the writing module 63 may be located at a driver layer of the host software; and the decomposing module 64 may be located at an operating system layer of the host software, or further located in a file system of the operating system layer.

For specific implementation of this embodiment, reference may be made to a method for writing hard disk data according to an embodiment of the present invention. In this embodiment of the present invention, because a decryption key is stored in a reserved area of a hard disk and does not occupy an available area of a hard disk, a storage resource is saved; and because data in the reserved area cannot be read by using a conventional command, the decryption key cannot be stolen, thereby improving reliability of data encryption and resolving a problem that existing encryption of hard disk data causes a decrease in actual data storage capacity of the hard disk and easy leakage. Further, a file system decomposes large plain-text data into small plain-text data blocks and then encrypts the plain-text data blocks respectively at a driver layer, thereby improving encryption efficiency.

FIG. 8 is a schematic structural diagram of an apparatus for reading hard disk data according to an embodiment of the present invention. As shown in FIG. 8, the apparatus includes:
a reading module 81, configured to read cipher-text data from an available area of a hard disk, and read a decryption key from a reserved area of the hard disk; and
a decrypting module 82, configured to decrypt, by using the decryption key read by the reading module 81, the cipher-text data read by the reading module 81 to obtain plain-text data.

Optionally, the reading module 81 is specifically configured to read the decryption key from the reserved area of the hard disk by using an SCSI READ LONG command.

FIG. 9 is a schematic structural diagram of another apparatus for reading hard disk data according to an embodiment of the present invention. As shown in FIG. 9, on a basis of the embodiment shown in FIG. 8, the reading module 81 is specifically configured to:
read multiple cipher-text data blocks from the available area of the hard disk, and read the decryption key corresponding to each cipher-text data block from the reserved area of the hard disk;
the decrypting module 82 is specifically configured to:
   decrypt, by using the decryption key read by the reading module 81 and corresponding to each cipher-text data block, the multiple cipher-text data blocks read by the reading module 81 to obtain multiple plain-text data blocks; and
   the apparatus further includes:
      a combining module 83, configured to combine the multiple plain-text data blocks obtained by the decrypting module 82 to obtain the plain-text data.

Further, if a size of each cipher-text data block does not exceed capacity of a data area of each sector on the hard disk, and each cipher-text data block is stored in a data area of a sector of the hard disk on a one-to-one correspondence, the reading module 81 may be specifically configured to:
read the multiple cipher-text data blocks respectively from data areas of multiple sectors of the hard disk, and read the decryption key corresponding to each cipher-text data block respectively from a reserved area of a sector in which each cipher-text data block is stored.

It should be noted that the apparatus for reading hard disk data according to this embodiment may be implemented by host software. Specifically, the reading module 81 and the decrypting module 82 may be located at a driver layer of the host software, and the combining module 83 may be located at an operating system layer of the host software, or further located in a file system of the operating system layer.

For specific implementation of this embodiment, reference may be made to a method for reading hard disk data according to an embodiment of the present invention. In this embodiment of the present invention, a decryption key stored in a reserved area of a hard disk is read, and cipher-text data read from an available area of the hard disk is decrypted to obtain plain-text data; because the decryption key does not occupy the available area of the hard disk, a storage resource is saved; and because data in the reserved area cannot be read by using a conventional command, the decryption key cannot be stolen, thereby improving reliability of data encryption and resolving a problem that existing encryption of hard disk data causes a decrease in actual data storage capacity of the hard disk and easy leakage. Further, small cipher-text data blocks are decrypted respectively at a driver layer and then are combined by a file system, thereby improving encryption efficiency as compared with the prior art in which the whole plain-text data is decrypted at an application layer.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some or all the technical features thereof, without departing from the scope of the technical solutions of the embodiments of the present invention.

## Claims

1. A method for writing hard disk data, comprising:
acquiring plain-text data;
encrypting the plain-text data by using an encryption key to obtain cipher-text data and a decryption key; and
writing the cipher-text data into an available area of a hard disk, and writing the decryption key into a reserved area of the hard disk.

2. The method according to claim 1, wherein before the encrypting the plain-text data by using an encryption key to obtain cipher-text data, the method further comprises:
decomposing the plain-text data into multiple plain-text data blocks;
the encrypting the plain-text data by using an encryption key to obtain cipher-text data specifically comprises:
encrypting the multiple plain-text data blocks respectively by using the encryption key to obtain multiple cipher-text data blocks and the decryption key corresponding to each cipher-text data block; and
the writing the cipher-text data into an available area of a hard disk, and writing the decryption key into a reserved area of the hard disk specifically comprises:
writing the multiple cipher-text data blocks into the available area of the hard disk, and writing the decryption key corresponding to each cipher-text data block into the reserved area of the hard disk.

3. The method according to 2, wherein a size of each cipher-text data block does not exceed capacity of a data area of each sector on the hard disk;
the writing the multiple cipher-text data blocks into the available area of the hard disk specifically comprises:
writing the multiple cipher-text data blocks into data areas of multiple sectors on a one-to-one correspondence; and
the writing the decryption key corresponding to each cipher-text data block into the reserved area of the hard disk specifically comprises:
writing the decryption key corresponding to each cipher-text data block into a reserved area of a sector in which each cipher-text data block is located.

4. The method according to any one of claims 1 to 3, wherein the writing the decryption key into a reserved area of the hard disk specifically comprises:
writing the decryption key into the reserved area of the hard disk by using a small computer system interface SCSI WRITE LONG command.

5. A method for reading hard disk data, comprising:
reading cipher-text data from an available area of a hard disk, and reading a decryption key from a reserved area of the hard disk; and
decrypting the cipher-text data by using the decryption key to obtain plain-text data.

6. The method according to claim 5, wherein the reading cipher-text data from an available area of a hard disk, and reading a decryption key from a reserved area of the hard disk specifically comprises:
reading multiple cipher-text data blocks from the available area of the hard disk, and reading the decryption key corresponding to each cipher-text data block from the reserved area of the hard disk;
the decrypting the cipher-text data by using the decryption key to obtain plain-text data specifically comprises:
decrypting the multiple cipher-text data blocks by using the decryption key corresponding to each cipher-text data block to obtain multiple plain-text data blocks; and
after the decrypting the cipher-text data by using the decryption key to obtain plain-text data, the method further comprises:
combining the multiple plain-text data blocks to obtain the plain-text data.

7. The method according to claim 6, wherein a size of each cipher-text data block does not exceed capacity of a data area of each sector on the hard disk, and each cipher-text data block is stored in a data area of a sector of the hard disk on a one-to-one correspondence;
the reading multiple cipher-text data blocks from the available area of the hard disk specifically comprises:
reading the multiple cipher-text data blocks respectively from data areas of multiple sectors of the hard disk; and
the reading the decryption key corresponding to each cipher-text data block from the reserved area of the hard disk specifically comprises:
reading the decryption key corresponding to each cipher-text data block respectively from a reserved area of a sector in which each cipher-text data block is stored.

8. The method according to any one of claims 5 to 7, wherein the reading the decryption key from a reserved area of the hard disk specifically comprises:
reading the decryption key from the reserved area of the hard disk by using a small computer system interface SCSI READ LONG command.

9. An apparatus for writing hard disk data, comprising:
an acquiring module, configured to acquire plain-text data;
an encrypting module, configured to encrypt, by using an encryption key, the plain-text data acquired by the acquiring module to obtain cipher-text data and a decryption key; and
a writing module, configured to write the cipher-text data obtained by the encrypting module into an available area of a hard disk, and write the decryption key obtained by the encrypting module into a reserved area of the hard disk.

10. The apparatus according to claim 9, further comprising:
a decomposing module, configured to decompose the plain-text data acquired by the acquiring module into multiple plain-text data blocks; wherein:
the encrypting module is specifically configured to respectively encrypt, by using the encryption key, the multiple plain-text data blocks obtained by the decomposing module to obtain multiple cipher-text data blocks and the decryption key corresponding to each cipher-text data block; and
the writing module is specifically configured to write the multiple cipher-text data blocks obtained by the encrypting module into the available area of the hard disk, and write the decryption key corresponding to each cipher-text data block that is obtained by the encrypting module into the reserved area of the hard disk.

11. The apparatus according to 10, wherein a size of each cipher-text data block does not exceed capacity of a data area of each sector on the hard disk; and
the writing module is specifically configured to:
write the multiple cipher-text data blocks obtained by the encrypting module into data areas of multiple sectors on a one-to-one correspondence, and write the decryption key obtained by the encrypting module and corresponding to each cipher-text data block into a reserved area of a sector in which each cipher-text data block is located.

12. The apparatus according to any one of claims 9 to 11, wherein the writing module is specifically configured to:
write the decryption key obtained by the encrypting module into the reserved area of the hard disk by using a small computer system interface SCSI WRITE LONG command.

13. An apparatus for reading hard disk data, comprising:
a reading module, configured to read cipher-text data from an available area of a hard disk, and read a decryption key from a reserved area of the hard disk; and
a decrypting module, configured to decrypt, by using the decryption key read by the reading module, the cipher-text data read by the reading module to obtain plain-text data.

14. The apparatus according to claim 13, wherein the reading module is specifically configured to:
read multiple cipher-text data blocks from the available area of the hard disk, and read the decryption key corresponding to each cipher-text data block from the reserved area of the hard disk;
the decrypting module is specifically configured to:
decrypt, by using the decryption key read by the reading module and corresponding to each cipher-text data block, the multiple cipher-text data blocks read by the reading module to obtain multiple plain-text data blocks; and
the apparatus further comprises:
a combining module, configured to combine the multiple plain-text data blocks obtained by the decrypting module to obtain the plain-text data.

15. The apparatus according to claim 14, wherein a size of each cipher-text data block does not exceed capacity of a data area of each sector on the hard disk, and each cipher-text data block is stored in a data area of a sector of the hard disk on a one-to-one correspondence; and
the reading module is specifically configured to:
read the multiple cipher-text data blocks respectively from data areas of multiple sectors of the hard disk, and read the decryption key corresponding to each cipher-text data block respectively from a reserved area of a sector in which each cipher-text data block is stored.
